# EUROPÄISCHE PATENTSCHRIFT

(11) **EP 2 839 492 B1**
(45) Veröffentlichungstag und Bekanntmachung des Hinweises auf die Patenterteilung: **16.11.2016**
(21) Anmeldenummer: 13712753.6
(22) Anmeldetag: 25.03.2013
(51) Int. Cl.: H01H 9/00, H01H 33/666, H02P 13/06, H01F 29/04

(54) **LASTSTUFENSCHALTER**
ON-LOAD TAP CHANGER
COMMUTATEUR EN CHARGE À GRADINS

(30) Priorität: 20.04.2012 DE 202012101477 U
(43) Veröffentlichungstag der Anmeldung: 25.02.2015
(73) Patentinhaber: Maschinenfabrik Reinhausen GmbH, 93059 Regensburg (DE)
(72) Erfinder: PANKOFER, Martin, 94447 Plattling (DE); STOCKER, Andreas, 93073 Neutraubling (DE)
(86) Internationale Anmeldenummer: PCT/EP2013/056264
(87) Internationale Veröffentlichungsnummer: WO 2013/156265

(56) Entgegenhaltungen:
- WO-A1-2011/012181
- WO-A1-2012/022397
- DE-C1- 4 237 165
- DE-C1- 19 847 745
- JP-A- S59 204 224
- US-A1- 2005 099 741

## Beschreibung

Die vorliegende Erfindung betrifft einen Laststufenschalter zur unterbrechungslosen Umschaltung zwischen verschiedenen Wicklungsanzapfungen eines Stufentransformators gemäß dem Oberbegriff des ersten Patentanspruches.

Laststufenschalter sind seit vielen Jahren zur unterbrechungslosen Umschaltung zwischen verschiedenen Wicklungsanzapfungen von Stufentransformatoren in großen Zahlen weltweit im Einsatz. Sogenannte Reaktorschalter, die besonders in Nord-Amerika verbreitet sind, besitzen eine Umschaltreaktanz, die eine langsame, kontinuierliche Umschaltung ermöglicht. Laststufenschalter nach dem Widerstandsschnellschalt-Prinzip bestehen üblicherweise aus einem Wähler zur leistungslosen Anwahl der jeweiligen Wicklungsanzapfung des Stufentransformators, auf die umgeschaltet werden soll, und einem Lastumschalter zur eigentlichen Umschaltung von der bisherigen auf die neue, vorgewählte Wicklungsanzapfung. Der Lastumschalter weist dazu üblicherweise Schaltkontakte und Widerstandskontakte auf. Die Schaltkontakte dienen dabei zur direkten Verbindung der jeweiligen Wicklungsanzapfung mit der Lastableitung, die Widerstandskontakte zur kurzzeitigen Beschaltung, d. h. Überbrückung mittels eines oder mehrerer Überschaltwiderstände. Die Entwicklungen der letzten Jahre führten jedoch weg von Lastumschaltern mit mechanischen Schaltkontakten im Isolieröl. Stattdessen werden vermehrt Vakuumschaltzellen als Schaltelemente eingesetzt.

Ein derartiger Laststufenschalter mit Vakuumschaltröhren ist beispielsweise in DE 10 2009 043 171 A1 offenbart. Hier trägt ein Lastumschalter eine von einem Kraftspeicher antreibbare Antriebswelle mit mindestens einer Kurvenscheibe. Die Kurvenscheibe weist mehrere Steuerkurven auf, wobei zwei an der Kurvenscheibe stirnseitig angeordnete Steuerkurven eine von einer Kreisform abweichende Kontur nach Art von Nocken aufweisen, an der kontaktschlüssig jeweils eine über einen Kipphebel mit einer Vakuumschaltröhre verbundene Rolle geführt wird, die die profilierte Kontur der jeweiligen Steuerkurve abgreift.

Bei einer besonderen Gattung von Laststufenschaltern, den so genannten Lastwählern, sind die beschriebenen Mittel zur Anwahl einer neuen Wicklungsanzapfung und die Mittel zur eigentlichen Lastumschaltung baulich vereinigt und werden gemeinsam betätigt. Üblicherweise sind Stufenschalter nach dem Prinzip der Widerstandsschnellschaltung zur unterbrechungslosen Umschaltung von einer Anzapfung eines Stufentransformators zu einer anderen so aufgebaut, dass die jeweils mit den Ausleitungen der Stufenwicklungen elektrisch in Verbindung stehenden festen Stufenkontakte in einer oder mehreren horizontalen Ebene bzw. Ebenen kreisförmig an einem Isolierstoffgerüst oder -zylinder angeordnet sind und durch von konzentrischen Antriebswellen betätigte drehbare Kontaktbrücken beschaltbar sind. Bei Lastwählern, bei denen die Stufenwahl und die eigentliche Lastumschaltung kombiniert sind, erfolgt die Betätigung der Kontaktbrücken dabei sprungartig nach Auslösung eines von der Antriebswelle des Schalters aufgezogenen Energiespeichers, meist Federkraftspeichers.

DE 42 37 165 C1 bildet die Basis für den Oberbegriff des Anspruchs 1 und beschreibt, abweichend von diesen üblichen Konstruktionen, einen Stufenschalter mit linearer Kontaktbetätigung, wobei die festen Stufenkontakte längs einer Bahn sich in das Innere des Schalters erstrecken und von einem verschiebbaren Schaltmechanismus beschaltbar sind, der wiederum von der Antriebswelle angetrieben wird. Der vertikal verschiebbare Schaltmechanismus besteht dabei aus einem kontinuierlich von der Antriebswelle antreibbaren Aufzugsschlitten, der den neuen festen Stufenkontakt vorwählt, und einem durch den Aufzugsschlitten mittels eines Energiespeichers aufziehbarem Abtriebsteil, das nach Auslösung sprungartig dem Aufzugsschlitten nachläuft und dabei die eigentliche Lastumschaltung von der bisherigen Anzapfung der Stufenwicklung auf die vorgewählte neue Anzapfung vollzieht. Die dazu erforderlichen Schaltelemente sind Bestandteil des Abtriebsteiles.

Aus der DE 198 47 745 C1 ist ein weiterer, auf die Anmelderin zurückgehender, Laststufenschalter mit linear angeordneten Wählerkontakten bekannt geworden. Oberhalb der Wählerkontakte, also örtlich getrennt, befinden sich die den jeweiligen Wählerkontakten einer jeden Phase zugeordneten feststehenden Vakuumschaltröhren zur eigentlichen, sprungartigen Lastumschaltung. Zur Betätigung dieses Laststufenschalters ist ein Federenergiespeicher notwendig, der während seiner Aufzugsbewegung die Wählerkontakte betätigt, als auch die Vakuumschaltelemente durch seine sprungartige Abtriebsbewegung antreibt.

Solche Laststufenschalter sind prinzipiell als Einbauschalter oder als Anbauschalter bekannt. Ein typischer Einbauschalter besitzt üblicherweise einen Lastumschalter in einem separaten Ölgefäß zur eigentlichen unterbrechungslosen Lastumschaltung und darunter angeordnet einen Wähler zur Vorwahl der Wicklungsanzapfung des Stufentransformators, auf die nachfolgend umgeschaltet werden soll. Ein solcher Einbauschalter wird, daher der Name, von oben vollständig in den ölgefüllten Transformatorkessel eingeführt und montiert. Dabei ist durch das separate Ölgefäß des Lastumschalters gewährleistet, dass sich dessen Ölvolumen nicht mit dem umgebenden Isolieröl im Transformatorkessel vermischt. Dabei ist es generell notwendig, elektrische Leitungen als sog. Leitungsgerüst von den einzelnen Wicklungsanzapfungen im Inneren des Transformators durch Transformatorkessel hin zum Stufenschalter zu führen.

Ein typischer Anbauschalter, wie er beispielsweise aus der Firmendruckschrift der Reinhausen Manufacturing Inc.: "VACUTAP ® RMV-A On-Load Tap-Changer for Regulating Transformers" bekannt ist, besitzt ein separates, umschließendes Gehäuse, in der Regel aus Blech, und wird seitlich an der Außenwandung des Transformators platziert. Das Gehäuse eines solchen Anbauschalters ist mit Isolieröl gefüllt. Auch hierbei ist es notwendig, die elektrischen Leitungen von den einzelnen Wicklungsanzapfungen im Inneren des Transformators durch den gesamten Transformatorkessel hindurch und weiterhin zusätzlich durch ein abdichtendes sogen. Transformatoren-Board, auch als Barrier-Board bezeichnet, nach außen zum seitlich angebauten Stufenschalter zu führen. Die DE 29 23 170 beschreibt ein solches Transformatoren-Board, dort als "Klemmenbrett" bezeichnet. Es ist notwendig, weil der angebaute Stufenschalter in einem separaten ölgefüllten Gehäuse untergebracht ist, dass vom ebenfalls ölgefüllten Transformatorkessel durch eine öldichte Trennwand getrennt ist, wobei am "Klemmenbrett" die Anschlüsse zur Verbindung der Transformatorenanzapfungen mit dem Stufenschalter vorgesehen sind. Sowohl das notwendige Leitungsgerüst als auch das Transformatoren-Board sind aufwändig und teuer.

Weiterhin ist es beim gesamten Stand der Technik notwendig, einen separaten Ölkreislauf für den Stufenschalter vorzusehen, der in der Regel auch ein separates Schutzrelais, eigene Rohrleitungen sowie einen separaten Ausdehner und auch separaten Luftentfeuchter enthält.

WO 2011 012 181 A1 beschreibt die Anordnung eines Stufenschalters in einem Regeltransformator mit einem Transformatordeckel. Dieser bekannte Stufenschalter ist unterhalb des Transformatordeckel angeordnet.

Aufgabe der vorliegenden Erfindung ist es, die Nachteile dieser bekannten Lösungen zu vermeiden und einen einfach aufgebauten, preisgünstigen Stufenschalter anzugeben.

Diese Aufgabe wird durch einen Laststufenschalter gemäß Anspruch 1 gelöst. Die Unteransprüche betreffen dabei besonders vorteilhafte Weiterbildungen der Erfindung.

Die erfindungsgemäße Idee besteht dabei darin, den Laststufenschalter direkt an der Unterseite des Transformatordeckels mittels eines Getriebemoduls zu befestigen, das mit dem an der gegenüberliegenden Außenseite des Transformatordeckels angeordneten Motorantrieb zusammenwirkt. Das Getriebemodul weist hierfür bevorzugt ein flanschartiges Dichtmodul auf, das direkt an der Unterseite des Transformatordeckels angeordnet ist und mit dem Motorantrieb lösbar verbunden, insbesondere verschraubt, ist. Erfindungsgemäß ist damit an dem Getriebemodul der gesamte Lastumschalter befestigt. Das Getriebemodul hat sowohl die Aufgabe, den Laststufenschalter zu halten, als auch mittels des Dichtmoduls gegenüber der Außenseite des Transformators abzudichten. Verwindungen des Transformatordeckels beim Transport des Trafos werden somit nicht an den Laststufenschalter übertragen. Zudem kann damit ein Anschlussflansch mit überfräster Dichtfläche am Transformatordeckel entfallen. Darüber hinaus bietet diese Art der vorgeschlagenen Befestigung eine für den Transformatorbauer einfache Montage des Laststufenschalters innerhalb des Transformatorkessels.

Nach einer bevorzugten Ausführungsform der Erfindung ist eine Trägerplatte aus einem dielektrischen Material, insbesondere einem Kunststoff, vorgesehen, an der auf einer ersten Seite die Wählerkontakteinheiten und an einer zweiten Seite die Vakuumschaltröhren derart angeordnet sind, dass die Trägerplatte den für den Laststufenschalter notwendigen Erdabstand herstellt.

Nach einer nochmals weiteren Ausführungsform der Erfindung wird die jede Wählerkontakteinheit während einer Umschaltung entlang zweier im Wesentlichen parallel angeordneten Führungsstangen bewegt, die eine Linearführung der Wählerkontakteinheit sicherstellen und die von mehreren an der Trägerplatte angeordneten Traversen gehalten werden. Jede Wählerkontakteinheit umfasst dabei einen Gleitschlitten sowie einen Kontaktträger zur Aufnahme der beweglichen Wählerkontakte, die mit den festen Wählerkontakten zusammenwirken.

Nach einer wiederum weiteren Ausführungsform der Erfindung werden die beweglichen Wählerkontakte jeweils in einem Kontaktträger aufgenommen und wirken mit an der Trägerplatte angeordneten festen Wählerkontakten derart zusammen, dass die einzelnen festen Wählerkontakte durch eine Längsverschiebung der beweglichen Wählerkontakte samt Gleitschlitten, also der Wählerkontakteinheit, entlang der Führungsstange beschaltbar sind. Durch die Hin- und/oder Herbewegung der Wählerkontakteinheit werden die einzelnen festen Wählerkontakte beschaltet und damit der Regelbereich des Laststufenschalters durchlaufen. Auf besonders einfache Weise bilden die mehreren Traversen, an denen die Führungsstangen gehalten werden, einen mechanischen Anschlag für die längs verfahrbaren beweglichen Wählerkontakte, so dass damit der Regelbereich auch mechanisch begrenzt wird.

Nach einer nochmals weiteren bevorzugten Ausführungsform sind die Vakuumschaltröhren direkt an dem jeweiligen Gleitschlitten der entsprechenden Wählerkontakteinheit angeordnet. Auch bei dieser Ausführungsform werden sowohl die Vakuumschaltröhren, als auch die Wählerkontakteinheiten von einem gemeinsamen Motorantrieb ohne Zwischenschaltung eines Energiespeichers betrieben, indem der Motorantrieb mittels eines Umlenkgetriebes eine zentrale Gewindespindel, die ihrerseits wiederum die Drehbewegung in eine Längsverschiebung der Gleitschlitten umwandelt, derart antreibt, dass dadurch sowohl die beweglichen Wählerkontakte als auch die an den Wählerkontakteinheiten angeordneten Vakuumschaltröhren betätigbar sind.

Nach einer wiederum weiteren bevorzugten Ausführungsform der Erfindung wird von dem Motorantrieb sowohl eine Gewindespindel angetrieben, die ihrerseits mit den Wählerkontakteinheiten in Wirkverbindung steht, als auch eine Nockenwelle, mittels der die Vakuumschaltröhren betätigbar sind. Dies ermöglicht auf besonders vorteilhafte Weise eine einfache unabhängige Betätigung der Wählerkontakteinheiten von den Vakuumschaltröhren.

Nachfolgend sind die Erfindung und ihre Vorteile unter Bezugnahme auf die beigefügten Zeichnungen ausführlicher beschrieben. Es zeigen:
- FIG. 1: eine schematische Perspektivansicht einer Ausführungsform des erfindungsgemäßen Laststufenschalters;
- FIG.2a: eine erste seitliche Perspektivansicht des Laststufenschalters nach FIG. 1, an der die Wählerkontakte angeordnet sind;
- FIG. 2b: eine zweite seitliche Perspektivansicht des Laststufenschalters nach FIG. 1, an der die Vakuumschaltröhren angeordnet sind;
- FIG. 3: eine Detailansicht der Führungsstangen eines erfindungsgemäßen Laststufenschalters;
- FIG.4a: eine weitere Detailansicht der Wählerkontakteinheit eines erfindungsgemäßen Laststufenschalters;
- FIG. 4b: eine nochmals weitere Detailansicht der Wählerkontakteinheit eines erfindungsgemäßen Laststufenschalters;
- FIG. 5: eine Kontaktleiste eines erfindungsgemäßen Laststufenschalters;
- FIG. 6a: eine seitliche Perspektivansicht einer weiteren Ausführungsform eines erfindungsgemäßen Laststufenschalters;
- FIG. 6b: eine Detailansicht der seitlichen Perspektivansicht nach FIG. 6a;
- FIG. 7a: eine erste seitliche Perspektivansicht einer nochmals weiteren Ausführungsform eines erfindungsgemäßen Laststufenschalters;
- FIG. 7b: eine zweite seitliche Perspektivansicht der nochmals weiteren Ausführungsform nach FIG. 7a.

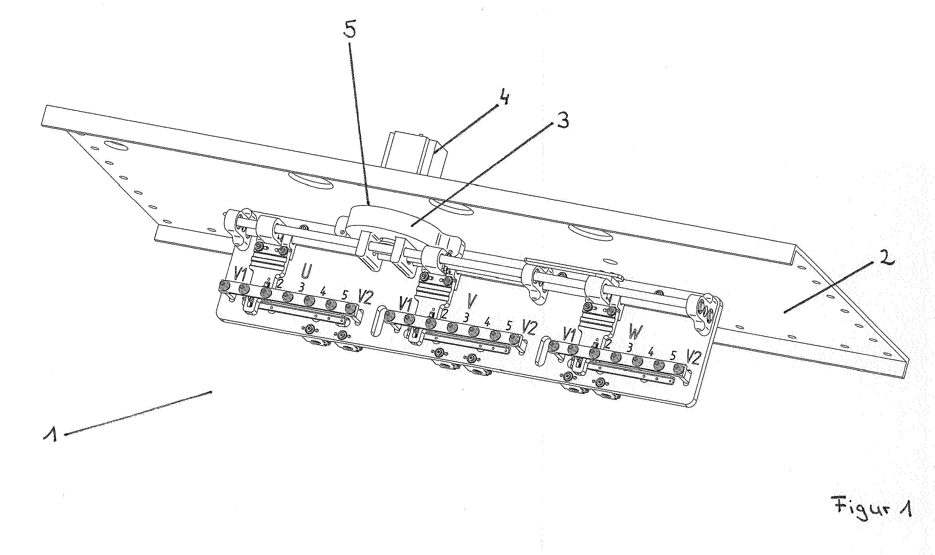

In FIG. 1 ist ein erfindungsgemäßer Laststufenschalter 1 in einer Perspektivansicht gezeigt, der direkt unterhalb eines Transformatordeckels 2 eines nicht näher dargestellten Stufentransformators angeordnet ist. Eine genauere Beschreibung der Bauteile des Laststufenschalters 1 und deren Funktion ist der unten stehenden Beschreibung der Figuren entnehmbar. Ein derartiger Stufentransformator, der aus dem Stand der Technik hinreichend bekannt ist, umfasst einen mit Isolieröl befüllten Transformatorkessel, in dem an einem Eisenjoch wenigstens eine Wicklung angeordnet ist. Diese Wicklung unterteilt sich in eine Stamm- und eine Regelwicklung, an der mehrere Wicklungsanzapfungen vorgesehen sind, die den Regelbereich bilden. Zudem weist der Laststufenschalter 1 ein an der Unterseite des Transformatordeckels 2 befestigtes Getriebemodul 3 auf, das mit einem an der gegenüberliegenden Außenseite des Transformatordeckels 2 angeordneten Motorantrieb 4 zusammenwirkt. Der Motorantrieb 4 kann dabei beispielsweise als handelsüblicher Schrittmotor ausgebildet sein. Das Getriebemodul 3 umfasst ein flanschartiges Dichtmodul 5, das direkt an der Unterseite des Transformatordeckels 2 angeordnet ist und mit dem Motorantrieb 4 lösbar verbunden, insbesondere verschraubt, ist. An dem Getriebemodul 3 ist damit der gesamte Laststufenschalter 1 gefestigt. Das Getriebemodul 3 erfüllt sowohl die Aufgabe, den Laststufenschalter 1 zu halten, als auch mittels des Dichtmoduls 5 gegenüber der Außenseite des Transformators hermetisch abzudichten. Verwindungen des Transformatordeckels 2 beim Transport des Transformators werden dadurch nicht an den Laststufenschalter 1 übertragen.

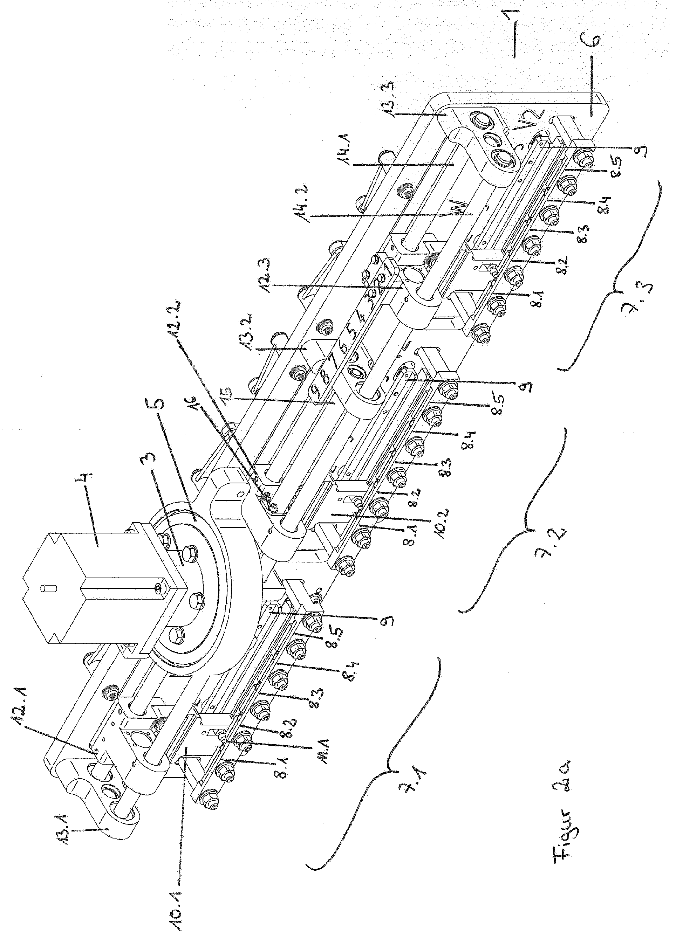

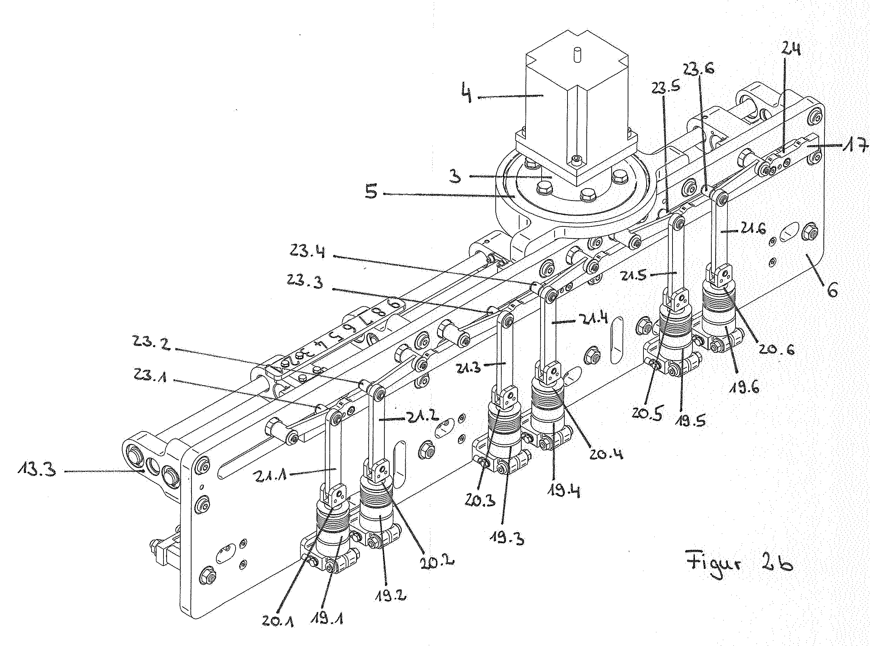

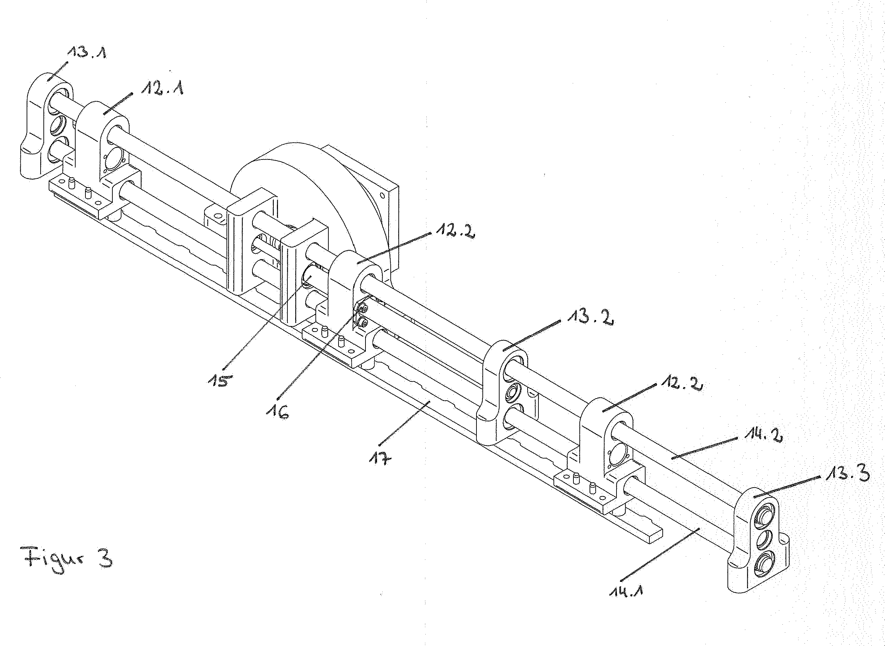

Die FIG. 2a und 2b zeigen den erfindungsgemäßen Laststufenschalter 1 in zwei unterschiedlichen perspektivischen Seitenansichten. Mit dem Getriebemodul 3 mechanisch verbunden ist eine Trägerplatte 6 aus dielektrischem Material, an der die einzelnen Baugruppen des Laststufenschalter 1 befestigbar sind. Die Trägerplatte 6 ist dabei aus elektrisch isolierendem Material gefertigt und dazu ausgebildet, alle wesentlichen Bauteile des Laststufenschalters 1 aufzunehmen. Die FIG. 2a zeigt dabei die erste Seite des Laststufenschalters 1, an der die Baugruppen der wenigstens einen Wählerkontakteinheit 7.1, 7.2 und 7.3 an der Trägerplatte 6 befestigt sind. In der Abbildung der FIG. 2a gibt es beispielhaft drei Wählerkontakteinheiten 7.1, 7.2 und 7.3; eine jede Wählerkontakteinheit 7.1, 7.2 und 7.3 ist dabei mit einer separaten Phase, also Wicklung, des Stufentransformators verbunden. Eine jede Wählerkontakteinheit 7.1 ... 7.3 umfasst jeweils mehrere beschaltbare feste Wählerkontakte 8.1 ... 8.5, die elektrisch mit den Wicklungsanzapfungen der Regelwicklung des Stufentransformators verbunden sind, eine mit einer Lastableitung LA verbundene Kontaktschiene 9 sowie einen Kontaktträger 10.1 ... 10.3 mit jeweils zwei federnd gelagerten, beweglichen Wählerkontakten 11.1 und 11.2. Abhängig vom Umschaltprinzip, also nach dem Reaktor- oder Widerstandsschnellschalt-Prinzip, sind dabei Mittelstellungen, in denen der eine bewegliche Wählerkontakt, beispielsweise der bewegliche Wählerkontakt 11.1, den ersten festen Wählerkontakt, beispielweise den festen Wählerkontakt 8.1, und der andere bewegliche Wählerkontakt, beispielsweise der bewegliche Wählerkontakt 11.2, den zum ersten festen Wählerkontakt benachbarten zweiten festen Wählerkontakt, beispielsweise den festen Wählerkontakt 8.2, beschaltet, als stationäre Betriebsstellung des Laststufenschalters 1 zulässig. Damit sind nach dem Rekatorschaltprinzip bei hier 5 dargestellten festen Wählerkontakten 8.1 ... 8.5 neun stationäre Betriebsstellungen möglich, während es bei einem Laststufenschalter 1 nach dem Widerstandschnellschalt-Prinzip, bei dem keine Mittelstellungen zulässig sind, nur 5 stationäre Betriebsstellungen gibt. Der Kontaktträger 10.1 ... 10.3 einer jeden Phase ist dabei an einem Gleitschlitten 12.1 ... 12.3 mechanisch fixiert und bildet zusammen mit diesem eine bauliche Einheit. Aufgenommen wird der Gleitschlitten 12.1 ... 12.3 an zwei parallel angeordneten, an der Trägerplatte 6 mittels mehreren Traversen 13.1 ... 13.X fixierten, Führungsstangen 14.1 und 14.2, derart, dass die einzelnen festen Wählerkontakte 8.1 ... 8.5 durch eine Längsverschiebung der beweglichen Kontakte 11.1 ... 11.3 samt Gleitschlitten 12.1 .... 12.3 entlang der Führungsstangen 14.1 ... 14.2 beschaltbar sind. Hierfür wird eine durch den Motorantrieb 4 erzeugte Drehbewegung mittels des Getriebemoduls 3 auf eine Gewindespindel 15 übertragen, die in Eingriff mit einer an dem mittleren Gleitschlitten 12.2 vorgesehenen Spindelmutter 16 steht, so dass damit eine Längsverschiebung des mittleren Gleitschlittens 12.2 entlang der Führungsstangen 14.1 und 14.2. erzeugbar ist. Die übrigen Gleitschlitten 12.1 und 12.3 stehen mit dem mittleren Gleitschlitten 12.2 über eine an der zweiten Seite der Trägerplatte 6 angeordnete, ebenfalls längsverschiebbaren Führungskulisse 17, in Wirkverbindung, indem die Gleitschlitten 12.1 und 12.3 mit dem Gleitschlitten 12.2 über die Führungskulisse 17 mechanisch gekoppelt sind. Eine genauere Beschreibung dieser mechanischen Zwangsführung der Gleitschlitten 12.1 und 12.3 mittels des Gleitschlittens 12.2 ist der unten stehenden Figurenbeschreibung zu FIG. 3 entnehmbar. Die mehreren Traversen 13.1 ... 13.3, an denen die Führungsstangen 14.1 und 14.2 gehalten werden, bilden zudem einen mechanischen Anschlag für die längs verfahrbaren beweglichen Kontakte 10.1 .... 10.3 samt Gleitschlitten 12.1 ... 12.3, so dass damit der Regelbereich des Laststufenschalters 1 auch mechanisch begrenzt ist.

Die FIG. 2b zeigt dabei die zweite Seite der Trägerplatte 6, an der die Schaltmittel zur unterbrechungslosen Umschaltung angeordnet sind. Bei den Schaltmitteln zur unterbrechungslosen Umschaltung handelt es sich bei der Ausführungsform der FIG. 2b um Vakuumschaltröhren 19.1 ... 19.6, wobei jeweils zwei Vakuumschaltröhren 19.1 und 19.2, bzw. 19.3 und 19.4, bzw. 19.5 und 19.6 jeweils einer Phase des Laststufenschalters 1 zugeordnet sind und mit einer entsprechenden Wählerkontakteinheit 7.1 ... 7.3 zusammenwirken. Bei den Vakuumschaltröhren 19.1 ... 19.6 handelt es sich um aus dem Stand der Technik bekannte Schaltmittel mit einem beweglichen Schaltkontakt 20.1 ... 20.6 sowie einem nicht näher dargestellten Festkontakt 18.1 ... 18.6. Jede der Vakuumschaltröhren 19.1 ... 19.6 umfasst dabei einen beweglichen Schaltkontakt 20.1 ... 20.6, der jeweils mit einem Koppelglied 21.1 ... 21.6 und einem Steuerhebel 22.1 ... 22.6 gelenkig an der zweiten Seite der Trägerplatte 6 angeordnet ist. An der gelenkigen Verbindung zwischen dem entsprechenden Koppelglied 21.1 ... 21 ... 6 und dem Steuerhebel 22.1 ... 22.6 ist jeweils auf der der Trägerplatte 6 zugewandten Seite eine drehbar gelagerte Rolle 23.1 ... 23.6 vorgesehen, die sich partiell kontaktschlüssig an der Oberseite 24 der Führungskulisse 17 entlangrollt. Die Oberseite 24 der Führungskulisse 17 weist dabei eine Profilierung in Form von Nocken auf, so dass die Vakuumschaltröhren 19.1 ... 19.6 durch eine Längsverschiebung der Führungskulisse 17 abhängig von der Profilierung der Oberseite 24 der Führungskulisse 17 beschaltet, d. h. geöffnet bzw. geschlossen werden können.

FIG. 3 zeigt eine vereinfachte Detailansicht der mechanischen Kopplung der Gleitschlitten 12.1 ... 12.3 mit der Führungskulisse 17. Es ist das Getriebemodul 3 gezeigt, das über hier nicht näher dargestellte Zahnräder eine Drehbewegung auf die Gewindespindel 15 überträgt, die ihrerseits die Drehbewegung auf eine in dem mittleren Gleitschlitten 12.2 vorgesehene Spindelmutter 16 weitergibt, so dass die Drehbewegung der Gewindespindel 15 in eine Längsbewegung des mittleren Gleitschlittens 12.2 entlang der Führungsstangen 14.1 und 14.2 umgewandelt wird. Indem die Gleitschlitten 12.1 ... 12.3 untereinander mittels der Führungskulisse 17 mechanisch gekoppelt sind, wird letzen Endes durch eine Längsverschiebung des mittleren Gleitschlittens 12.2 entlang der Führungsstangen 14.1 und 14.2 auch eine Längsschiebung der beiden übrigen Gleitschlitten 12.1 und 12.3 bewirkt.

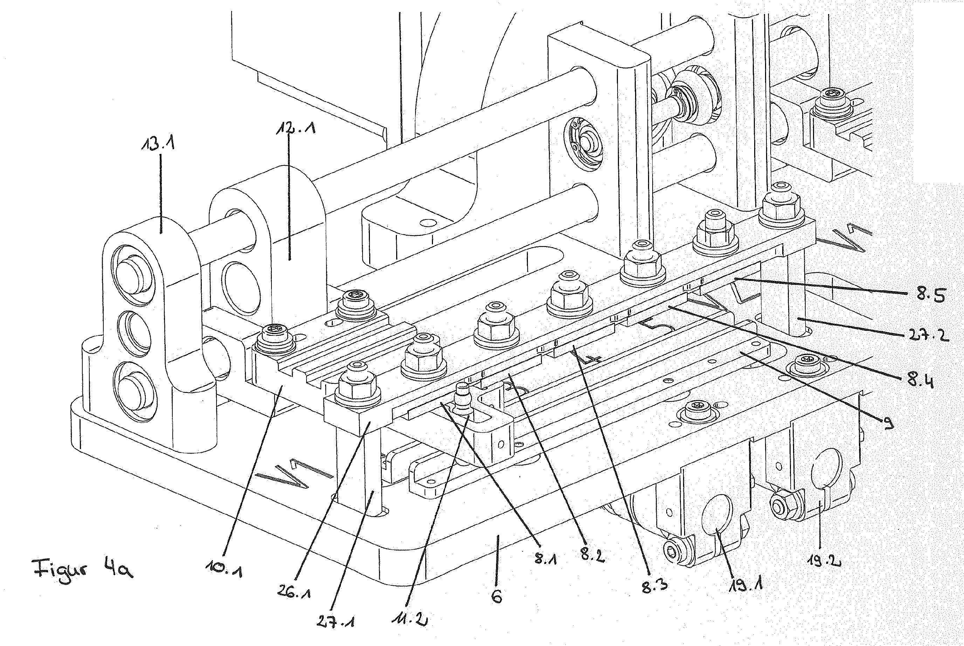

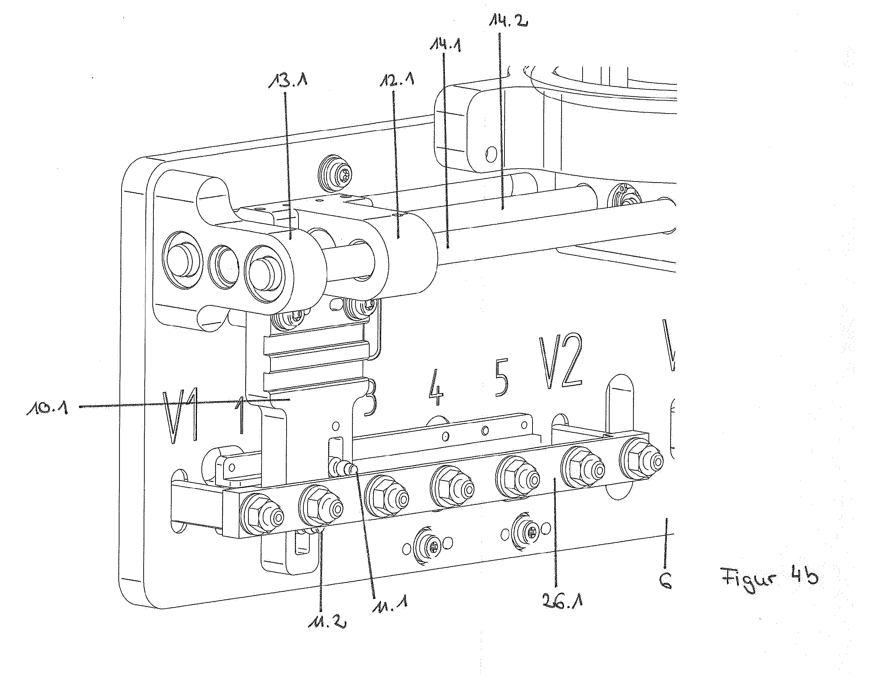

Die FIG. 4a und 4b zeigen in zwei unterschiedlichen Perspektiven eine weitere Detailansicht der Wählerkontakteinheit 7.1 einer Phase des erfindungsgemäßen Laststufenschalters 1 und erläutert diese beispielhaft; die Wählerkontakteinheiten 7.2 und 7.3 sind identisch aufgebaut. Daher gelten die nachfolgenden Erklärungen auch für diese Wählerkontakteinheiten 7.2 und 7.3. Die festen Wählerkontakte 8.1 ... 8.5 sind dabei an einer Kontaktleiste 25.1 aus Kunststoff angeordnet, beispielsweise mittels einer hier dargestellten Schraubverbindung. An der Trägerplatte 6 ist die Kontaktleiste 25.1 mittels jeweils zwei Abstandhaltern 27.1 ... 27.2 befestigt, die als Anschluss einer nicht dargestellten Überschaltdrossel genutzt werden. Zudem weist die Kontaktleiste 25.1 an ihrer Längsseite eine Steuerkulisse 26.1 auf, an der beidseitig mehrere Nocken 28.1 ... 28.4 angeordnet sind, um die federnd gelagerten Wählerkontakte 11.1 und 11.2 der entsprechenden Wählerkontakteinheit 7.1 bei einer Längsverschiebung des korrespondieren Gleitschlittens 12.1 mittels der an der Steuerkulisse 26.1 vorgesehenen Nocken 28.1 ... 28.4 vertikal zu bewegen, abhängig von der Kontur der mehreren Nocken 28.1 ... 28.4. Die Kontur der Nocken 28.1 ... 28.4 ist dabei so bemessen, dass die beweglichen Wählerkontakte 11.1 und 11.2 der Wählerkontakteinheit 7.1 zwischen zwei benachbarten festen Wählerkontakten 8.1 ... 8.5 von dem aktuell beschalteten festen Wählerkontakt, hier 8.1, abheben, nachdem sie nach vollzogener Umschaltung den nächsten festen Wählerkontakt, hier 8.2, wieder beschalten. Es ist also eine Mittelstellung der beweglichen Wählerkontakte 11.1 und 11.2 auf zwei benachbarten festen Wählerkontakten 8.1 ... 8.5 nach dem Reaktorschaltprinzip zulässig. Zur definierten Kontaktgabe sind die Kontaktstücke 11.1 und 11.2 an der eigentlichen Kontaktfläche ballig ausgebildet.

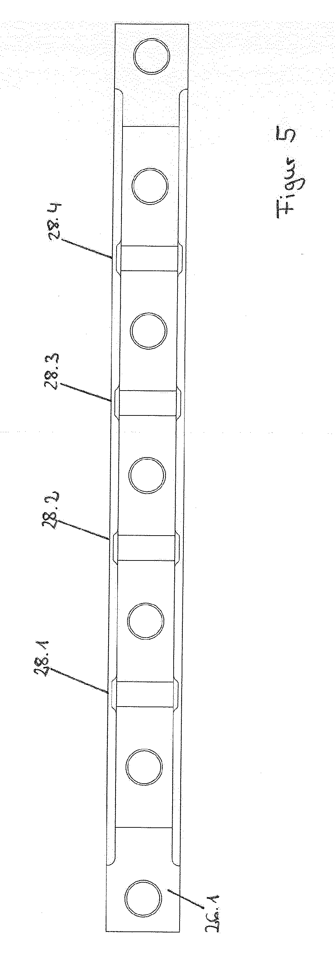

FIG. 5 zeigt die Kontaktleiste 25.1 ... 25.3 mit der Steuerkulisse 26.1 ... 26.3 und den jeweils mehreren Nocken 28.1 ... 28.4 in einer Detaildarstellung, mittels denen sich die entsprechenden beweglichen Wählerkontakte 11.1 und 11.2, bzw. 11.3 und 11.4, bzw. 11.5 und 11.6, einer jeden Wählerkontakteinheit 7.1 ... 7.3 während eines Umschaltvorgangs, abhängig von der Konturierung der Nocken 28.1 ... 28.4, vertikal verschieben.

Im eingebauten Zustand des erfindungsgemäßen Laststufenschalters 1 in einem Stufentransformator sind die beweglichen Schaltkontakte 20.1 ... 20.6 der Vakuumschaltröhren 19.1 ... 19.6 elektrisch mit den der jeweiligen Phase zugehörigen Abstandshaltern 27.1 ... 27.2 und damit letzten Endes mit der entsprechenden Widerstanddrosseln verbunden, während der entsprechende Festkontakt 18.1 ... 18.6 der korrespondierenden Vakuumschaltröhre 19.1 ... 19.6 mit der Kontaktschiene 9 der dazugehörigen Phase elektrisch verschaltet wird. Grundsätzlich wäre es jedoch auch denkbar, die elektrische Verschaltung des Laststufenschalters 1 in genau entgegengesetzter Art und Weise zu dem eben Beschriebenen vorzunehmen.

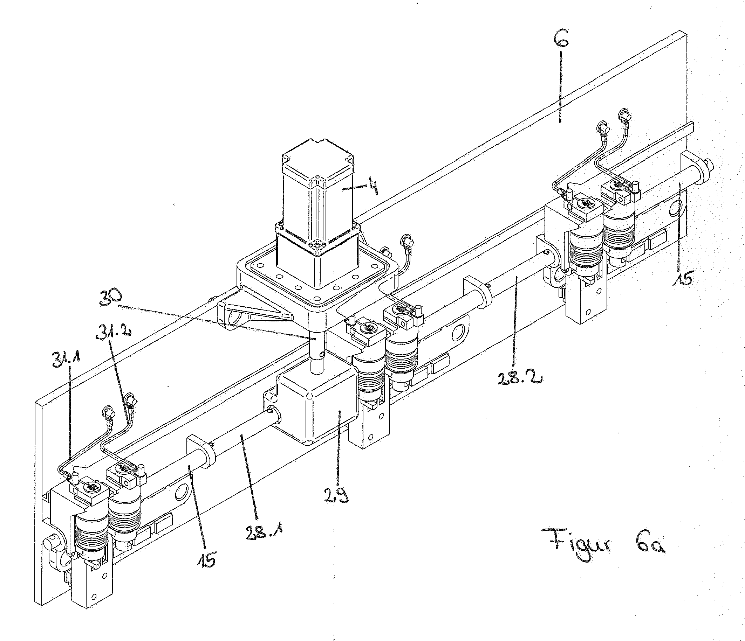

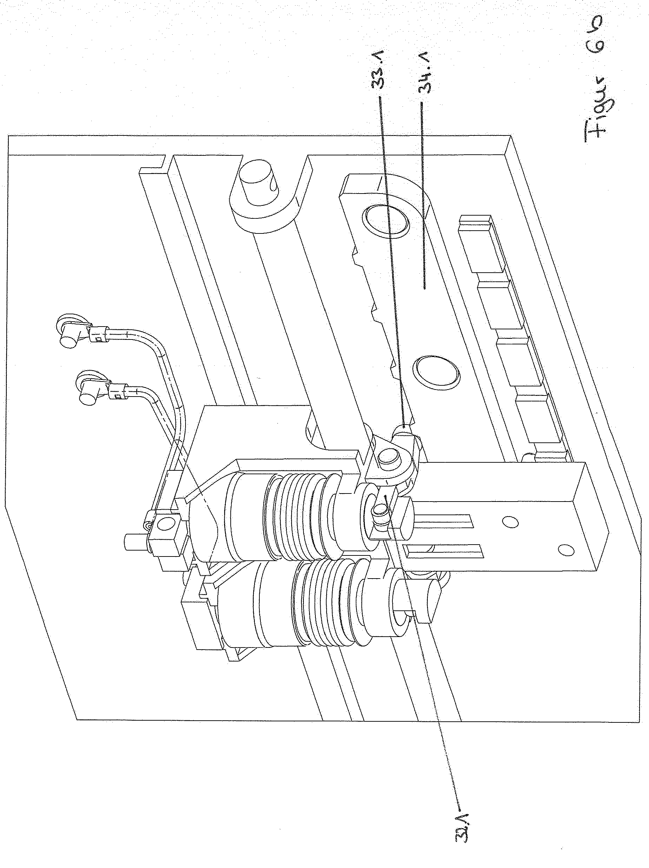

In den FIG. 6a und 6b ist eine weitere Ausführungsform eines erfindungsgemäßen Laststufenschalters 1 gezeigt. In der Figurenbeschreibung wird sich darauf beschränkt, die Unterschiede zu den voranstehenden Figuren zu erläutern, wobei identische Bauteile mit den selben Bezugszeichen wie in den FIG. 1 bis 5 angesprochen werden. Bei dieser Ausführungsform des erfindungsgemäßen Laststufenschalters 1 sind die Schaltmittel zur unterbrechungslosen Umschaltung, also die Vakuumschaltröhren 19.1 ... 19.6, direkt an dem entsprechenden Gleitschlitten 12.1 ... 12.3 der jeweiligen Wählerkontakteinheit 7.1 ... 7.3 angeordnet und samt diesem entlang der Gewindespindel 15 verfahrbar ausgebildet. Eine jede Wählerkontakteinheit 7.1 ... 7.3 hat bei dieser Ausführungsform ihre eigene, in dieser Darstellung nicht sichtbare, Spindelmutter 16 in dem entsprechenden Gleitschlitten 12.1 ... 12. 3 angeordnet, so dass die Wählerkontakteinheiten 7.1 ... 7.3 damit entlang der Isolierwelle 15 synchron verschiebbar ausgebildet sind. Die Isolierwelle 15 ist aus mehreren Teilstücken zusammengebaut und weist zwischen den entsprechenden Teilstücken jeweils ein aus elektrisch isolierendem Material geformtes Kupplungsrohr 28.1 ... 28.2 auf. Zudem ist ein Winkelgetriebe 29 vorgesehen, um die Drehbewegung des Motorantriebs 3 auf die Gewindespindel 15 weiterzugeben. Zwischen dem Motorantrieb 3 und dem Winkelgetriebe 29 ist eine Isolierwelle 30 aus dielektrischem Material angeordnet, die die Drehbewegung des Motorantriebs 3 in das Winkelgetriebe 29 einleitet. Die Festkontakte 18.1 ....18.6 der an dem entsprechenden Gleitschlitten 12.1 ... 12.3 angeordneten Vakuumschaltröhren 19.1 ... 19.6 sind jeweils mittels Litzen 31.1 ....31.6 an der Trägerplatte 6 verschraubt und mit nicht dargestellten Widerstanddrosseln elektrisch verbunden. Die beweglichen Schaltkontakte 20.1 ... 20.6 der Vakuumschaltröhren 19.1 ... 19.6 stehen mit einer Kipphebelanordnung 32.1 ... 32.6 in mechanischer Wirkverbindung, die jeweils eine Rolle 33.1 ... 33.6 aufweisen. In eingebauten Zustand der Laststufenschalters 1 sind die beweglichen Schaltkontakte 20.1 ... 20.6 der Vakuumschaltröhren 19.1 ....19.6 mit den beweglichen Wählerkontakten 11.1 ... 11.2 der zugehörigen Phase elektrisch verbunden. Die entsprechenden Rollen 33.1 ... 33.6 wälzen sich bei einer Längsverschiebung des Gleitschlittens 12.1 ... 12.3 an der Profilierung einer Kulissenschiene 34.1 ... 34.3. entlang, so dass damit die jeweilige Kipphebelanordnung 32.1 ... 32.6 den entsprechenden beweglichen Schaltkontakt 20.1 ... 20.6 der dazugehörigen Vakuumschaltröhre 19.1 ....19.6 abhängig von der Profilierung der Kulissenschiene 34.1 .. 34.3 beschaltet, d.h. öffnet oder schließet. Die festen Wählerkontakte 8.1 ... 8.5, von denen man in dieser Darstellung nur die festen Wählerkontakte 8.3 ... 8.5 sieht, sind hier direkt an der Trägerplatte 6 angeordnet und auf der hier nicht dargestellten, gegenüberliegenden Seite, der Trägerplatte 6 elektrisch mit den entsprechenden Wicklungsanzapfungen der Regelwicklung des Stufentransformators verbunden.

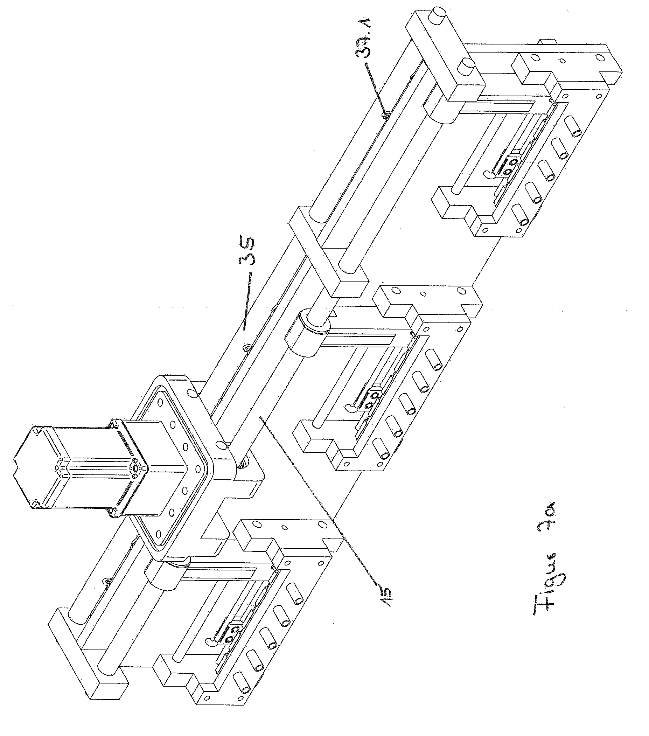

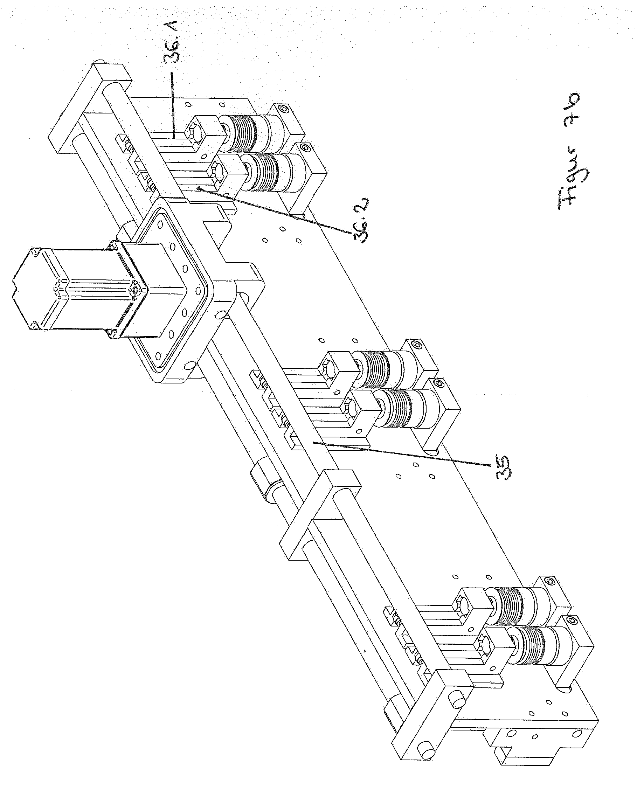

In den FIG. 7a und 7b ist eine nochmals weitere Ausführungsform eines erfindungsgemäßen Laststufenschalters 1 gezeigt. Auch bei dieser Figurenbeschreibung wird sich darauf beschränkt, die Unterschiede zu den voranstehenden Figuren zu erläutern, wobei identische Bauteile mit den selben Bezugszeichen wie in den FIG. 1 bis 5 angesprochen werden. In der Ausführungsform der FIG. 7a und 7b wird von dem Motorantrieb 3 sowohl eine Gewindespindel 15 angetrieben, die ihrerseits mit jeder der Wählerkontakteinheiten 7.1 ... 7.3 in mechanischer Wirkverbindung steht, als auch eine Nockenwelle 35, mittels der die Schaltmittel zur unterbrechungslosen Umschaltung, also die Vakuumschaltröhren 19.1 ... 19.6, betätigbar sind. Entgegen der Darstellung der FIG. 6a und 6b ist die Gewindespindel 15 hier über deren gesamte Länge als Gewindespindel ausgebildet und wird mit der in jedem der Gleitschlitten 12.1 ... 12.3 vorgesehenen Spindelmutter 16 in Eingriff gebracht, derart, dass bei einer Drehung der Gewindespindel 15 ein jeder Gleitschlitten 12.1 ... 12.3 horizontal verfährt. Die übrige Wählerkontakteinheit 7.1 ... 7.3 ist identisch zu der in FIG. 1 bis 5 beschriebenen Wählerkontakteinheit 7.1 ... 7.3 aufgebaut. Zur Betätigung der Vakuumschaltröhren 19.1 ... 19.6 ist jeder bewegliche Schaltkontakt 20.1 ....20.6 mit einer Hubstange 36.1 ... 36.6 mechanisch zwangsgekoppelt, die mit, auf der den beweglichen Schaltkontakten 20.1 ... 20.6 gegenüberliegend, an der Nockenwelle 35 angeordneten, Steuernocken 37.1 ... 37.6 zusammenwirkt, derart, dass bei einer Drehung der Nockenwelle 35 die Steuernocken 37.1 ... 37.6 auf die korrespondierende Hubstange 36.1 ... 36.6 eine Vertikalbewegung einleitet und damit letzten Endes den dazugehörigen beweglichen Schaltkontakt 20.1 ... 20.6 der entsprechenden Vakuumschaltröhren 19.1 ... 19.6 betätigt. Abhängig von der dem Laststufenschalter 1 zu Grunde liegenden Schaltsequenz sind dabei am Umfang der Nockenwelle 35 mehrere Steuernocken 37.1 ... 37.6 je Vakuumschaltröhre 19.1 ... 19.6 vorgesehen.

Zusammenfassend lässt sich feststellen, dass der erfindungsgemäßen Laststufenschalter 1 damit sowohl nach dem Reaktorschaltprinzip, als auch nach dem Widerstandsschnellschaltprinzip einsetzbar ist. Abhängig vom zu Grunde liegenden Umschaltprinzip sind bei hier 5 dargestellten festen Wählerkontakten 8.1 ... 8.5 nach dem Reaktorschaltprinzip 9 stationäre Betriebsstellungen zulässig, während bei einem nach dem Widerstandsschnellschaltprinzip aufgebauten erfindungsgemäßen Laststufenschalter 1 lediglich 5 stationäre Betriebsstellungen zulässig sind.

### BEZUGSZEICHEN

- 1: Laststufenschalter
- 2: Transformatordeckel
- 3: Getriebemodul
- 4: Motorantrieb
- 5: Dichtmodul
- 6: Trägerplatte
- 7.1 ... 7.3: Wählerkontakteinheit
- 8.1 ... 8.5: feste Wählerkontakte
- 9: Kontaktschiene
- 10.1 ... 10.3: Kontaktträger
- 11.1, 11.2: bewegliche Wählerkontakte
- 12.1 ... 12.3: Gleitschlitten
- 13.1 ... 13.3: Traversen
- 14.1, 14.2: Führungsstangen
- 15: Gewindespindel
- 16: Spindelmutter
- 17: Führungskulisse
- 18.1 ... 18.6: Festkontakte
- 19.1 ... 19.6: Vakuumschaltröhre
- 20.1 ... 20.6: bewegliche Schaltkontakte
- 21.1 ... 21.6: Koppelglieder
- 22.1 ... 22.6: Steuerhebel
- 23.1 ... 23.6: Rolle
- 24: Oberseite Führungskulisse
- 25.1 ... 25.3: Kontaktleiste
- 26.1 ... 26.3: Steuerkulisse
- 27.1 ... 27.2: Abstandshalter
- 28.1 ... 28.2: Kupplungsrohr
- 29: Winkelgetriebe
- 30: Isolierwelle
- 31.1 ... 31.6: Litze
- 32.1 ... 32.6: Kipphebelanordnung
- 33.1 ... 33.6: Rollen
- 34.1 ... 34.3: Kulissenschiene
- 35: Nockenwelle
- 36.1 ... 36.6: Hubstange
- 37.1 ... 37.6: Steuernocken

## Patentansprüche

1. Laststufenschalter (1) zur unterbrechungslosen Umschaltung zwischen verschiedenen Wicklungsanzapfungen eines Stufentransformators, umfassend
- eine Wählerkontakteinheit (7.1, 7.2, 7.3), die jeweils mehrere feste Wählerkontakte (8.1, 8.2, 8.3, 8.4, 8.5), die jeweils mit den einzelnen Wicklungsanzapfungen elektrisch in Verbindung stehen, und zwei längs verschiebbare bewegliche Wählerkontakte (11.1, 11.2), durch die die festen Wählerkontakte (8.1 ... 8.6) kontaktierbar sind, umfasst;
- für jede Phase zwei Vakuumschaltröhren (19.1, 19.2, 19.3, 19.4, 19.5, 19.6) zur unterbrechungslosen Umschaltung;
- einen Motorantrieb (4) zur Einleitung einer Antriebbewegung in den Laststufenschalter (1);
- eine Gewindespindel (15);
**dadurch gekennzeichnet, dass**
- der gesamte Lastumschalter (1) mittels eines Getriebemoduls (3) an der Unterseite eines Transformatordeckels (2) angeordnet ist;
- der Laststufenschalter (1) drei Wählerkontakteinheiten (7.1 ... 7.3) umfasst;
- jede Wählerkontakteinheit (7.1 ... 7.3) einen Gleitschlitten (12.1 ... 12.3) und einen Kontaktträger (10.1 ... 10.3) umfasst;
- eine durch den Motorantrieb (4) erzeugte Drehbewegung mittels des Getriebemoduls (3) auf die Gewindespindel (15) übertragbar ist, die in Eingriff mit einer an einem mittleren Gleitschlitten (12.2) vorgesehenen Spindelmutter steht, so dass damit eine Längsverschiebung des mittleren Gleitschlittens (12.2) entlang von Führungsstangen (14.1,14.2) erzeugbar ist;
- die übrigen Gleitschlitten (12.1, 12.3) mit dem mittleren Gleitschlitten (12.2) über eine ebenfalls längsverschiebbare, an den mittleren Gleitschlitten (12.2) mechanisch gekoppelte Führungskulisse (17) in Wirkverbindung stehen, so dass die übrigen Gleitschlitten (12.1, 12.3) ihrerseits mit dem mittleren Gleitschlitten (12.2) über die Führungskulisse (17) mechanisch derart gekoppelt sind, dass damit gleichzeitig sowohl die Wählerkontakteinheiten (7.1 ... 7.3) als auch die Vakuumschaltröhren (19.1 ... 19.6) betätigbar sind.

2. Laststufenschalter (1) nach dem vorigen Anspruch, wobei
- das Getriebemodul (3) ein flanschartiges Dichtmodul (5) umfasst.

3. Lastumschalter nach einem der vorigen Ansprüche, wobei
- eine Trägerplatte (6) aus einem dielektrischen Material vorgesehen ist, an deren ersten Seite die Wählerkontakteinheiten (7.1 ... 7.3) und an deren zweiten Seite die Vakuumschaltröhren (19.1 ... 19.6) angeordnet sind.

4. Laststufenschalter (1) nach dem vorigen Anspruch, wobei
- jeder Gleitschlitten (12.1 ... 12.3) von jeweils zwei parallel angeordneten Führungsstangen (14.1, 14.2) aufgenommen wird, die ihrerseits mittels Traversen (13.1..13.3) an der Trägerplatte (6) angeordnet sind.

5. Laststufenschalter (1) nach einem der vorigen Ansprüche und Anspruch 3, wobei
- bei jeder Wählerkontakteinheit (7.1 ... 7.3) die beweglichen Wählerkontakte (11.1, 11.2) in dem Kontaktträger (10.1 ... 10.3) aufgenommen werden und mit den jeweiligen, an der Trägerplatte (6) angeordneten festen Wählerkontakten (8.1 ... 8.5) zusammenwirken.

6. Laststufenschalter (1) nach einem der vorigen Ansprüche und Anspruch 4, wobei
- jede Wählerkontakteinheit (7.1 ... 7.3) entlang der Führungsstangen (14.1, 14.2) mittels des jeweiligen Gleitschlittens (12.1 ... 12.3) verschiebbar derart angeordnet ist, dass damit der Regelbereich des Laststufenschalters (1) durchlaufen werden kann.

7. Laststufenschalter (1) nach einem der vorigen Ansprüche und Anspruch 4, wobei
- die Traversen (13.1, 13.3) einen mechanischen Anschlag für die Wählerkontakteinheiten (7.1 ... 7.3) derart bilden, dass der Regelbereich des Laststufenschalters (1) mechanisch begrenzt ist.

8. Laststufenschalter (1) nach einem der vorigen Ansprüche, wobei
- die beweglichen Wählerkontakte (11.1, 11.2) einer Phase in jeder stationären Betriebsstellung mindestens einen festen Wählerkontakt (8.1 ... 8.5) derselben Phase des Laststufenschalters (1) beschalten.

9. Laststufenschalter (1) nach einem der vorigen Ansprüche, wobei
- jeweils zwei bewegliche Wählerkontakte (11.1, 11.2) in einem Kontaktträger (10.1 ... 10.3) federnd gelagert aufgenommen werden.

10. Laststufenschalter (1) nach einem der vorigen Ansprüche und Anspruch 3, wobei
- jede Vakuumschaltröhre (19.1 ... 19.6) einen beweglichen Schaltkontakt (20.1 ... 20.6) umfasst, der mit einem Koppelglied (21.1 ... 21.6) und einem Steuerhebel (22.1 ... 22.6) gelenkig, mechanisch in Wirkverbindung steht;
- an jeder gelenkigen Verbindung zwischen dem entsprechenden Koppelglied (21.1 ... 21.6) und dem Steuerhebel (22.1 ... 22.6) auf der der Trägerplatte (6) zugewandten Seite eine Rolle (23.1 ... 23.6) vorgehen ist, die sich partiell kontaktschlüssig an einer profilierten Oberseite (24) der Führungskulisse (17) entlang rollt, so dass die jeweilige Vakuumschaltröhre (19.1 ... 19.6) durch eine Längsverschiebung der Führungskulisse (17) abhängig von der Profilierung ihrer Oberseite (24) beschaltbar ist.

11. Laststufenschalter (1) nach einem der vorigen Ansprüche und Anspruch 3, wobei
- bei jeder Wählerkontakteinheit (7.1 ... 7.3) die festen Wählerkontakte (8.1 ... 8.5) an einer Kontaktleiste (25.1 ... 25.3) angeordnet sind, die ihrerseits mittels Abstandshaltern (27.1 ... 27.3) an der Trägerplatte (6) befestigt ist.

12. Laststufenschalter (1) nach dem vorigen Anspruch, wobei
- jede Kontaktleiste (25.1 ... 25.3) an ihrer Längsseite eine Steuerkulisse (26.1 ... 26.3) aufweist, an der beidseitig mehrerer Nocken angeordnet sind.

13. Laststufenschalter (1) nach dem vorigen Anspruch, wobei
- bei jeder Wählerkontakteinheit (7.1 ... 7.3) die Kontur der Nocken so bemessen ist, dass die beweglichen Wählerkontakte (11.1, 11.2) zwischen zwei benachbarten festen Wählerkontakten (8.1 ... 8.5) von dem aktuell beschalteten festen Wählerkontakt abheben, nachdem die beweglichen Wählerkontakte (11.1, 11.2) nach vollzogener Umschaltung den nächsten festen Wählerkontakt wieder beschalten.

14. Laststufenschalter (1) nach einem der vorigen Ansprüche 1 bis 13, wobei
- pro Phase jeweils zwei Vakuumschaltröhren (19.1 und 19.2, 19.3 und 19.4, 19.5 und 19.6) direkt an dem entsprechenden Gleitschlitten (12.1 ... 12.3) der jeweiligen Wählerkontakteinheit (7.1 ... 7.3) angeordnet sind;
- der Motorantrieb (4) mittels eines Winkelgetriebes (29) die zentrale Gewindespindel (15) antreibt;
- jeder Gleitschlitten (12.1 ... 12.3) eine separate Spindelmutter (16) aufweist;
- die Gewindespindel (15) mit jeder Spindelmutter (16) zusammenwirkt und die Drehbewegung in eine synchrone Längsverschiebung der Gleitschlitten (12.1 ... 12.3) derart umwandelbar ist, dass dadurch sowohl die beweglichen Wählerkontakte (11.1, 11.2) als auch die Vakuumschaltröhren (19.1 ... 19.6) betätigbar sind.

15. Laststufenschalter (1) nach Anspruch 1, wobei
- der Motorantrieb (4) sowohl die Gewindespindel (15), die ihrerseits mit jeder Wählerkontakteinheit (7.1 ... 7.3) in Wirkverbindung steht, als auch eine Nockenwelle (35), mittels der die Vakuumschaltröhren (19.1 ... 19.6) betätigbar sind, derart antreibt, dass dadurch sowohl die beweglichen Wählerkontakte (11.1, 11.2) als auch die Vakuumschaltröhren (19.1 ... 19.6) betätigbar sind.

16. Laststufenschalter (1) nach einem der vorigen Ansprüche zur Verwendung der Spannungsregelung eines Verteiltransformators.

## Claims

1. On-load tap changer (1) for uninterrupted switching over between different winding taps of a tapped transformer, comprising
- a selector contact unit (7.1, 7.2, 8.3) which comprises a respective plurality of fixed selector contacts (8.1, 8.2, 8.3, 8.4, 8.5), which are respectively electrically connected with the individual winding taps, and two longitudinally displaceable movable selector contacts (11.1, 11.2) by which by the fixed selector contacts (8.1 ... 8.6) are contactable;
- two vacuum interrupters (19.1, 19.2, 19.3, 19.4, 19.5, 19.6) for each phase for uninterrupted switching over;
- a motor drive (4) for introducing a drive movement into the on-load tap changer (1); and
- a threaded spindle (15);
**characterised in that**
- the entire load changeover switch (1) is arranged by means of a transmission module (3) at the underside of a transformer cover (2);
- the on-load lap changer (1) has three selector contact units (7.1 ... 7.3);
- each selector contact unit (7.1 ... 7.3) has a slide carriage (12.1 ... 12.3) and a contact carrier (10.1 ... 10.3);
- a rotational movement generated by the motor drive (4) is transmissible by means of the transmission module (3) to the threaded spindle (15), which is engaged with a spindle nut provided at a centre slide carriage (12.2), so that a longitudinal displacement of the centre slide carriage (12.2) along guide rods (14.1, 14.2) can thereby be produced; and
- the remaining slide carriages (12.1, 12.3) are operatively connected with the centre slide carriage (12.2) by way of a similarly longitudinally displaceable guide link (17), which is mechanically coupled with the centre slide carriage (12.2), so that the remaining slide carriages (12.1, 12.3) in turn are so mechanically coupled with the centre slide carriage (12.2) by way of the guide link (17) that not only the selector contact units (7.1 ... 7.3), but also the vacuum interrupters (19.1 ... 19.6) are thereby simultaneously actuable.

2. On-load tap changer (1) according to the preceding claim, wherein
- the transmission module (3) comprises a flange-like sealing module (5).

3. On-load tap changer according to one of the preceding claims, wherein
- a support plate (6) of a dielectric material, at the first side of which the selector contact unit (7.1 ... 7.3) and at the second side of which the vacuum interrupters (19.1 ... 19.6) are arranged, is provided.

4. On-load tap changer (1) according to the preceding claim, wherein
- each slide carriage (12.1 ... 12.3) is received by two parallelly arranged guide rods (14.1, 14.2) which in turn are arranged at the support plate (6) by means of cross members (13.1 ... 13.3).

5. On-load tap changer (1) according to one of the preceding claims and claim 3, wherein
- at each selector contact unit (7.1 ... 7.3) the movable selector contacts (11.1, 11.2) are received in the contact carrier (10.1, 10.3) and co-operate with the respective fixed selector contacts (81.... 8.5) arranged at the support plate (6).

6. On-load tap changer (1) according to one of the preceding claims, and claim 4, wherein
- each selector contact unit (7.1 ... 7.3) is arranged to be so displaceable along the guide rods (14.1, 14.2) by means of the respective slide carriage (12.1 ... 12.3) that it is thereby possible to run through the regulating range of the on-load tap changer (1).

7. On-load tap changer (1) according to one of the preceding claims and claim 4, wherein
- the cross-members (13.1, 13.3) form a mechanical abutment for the selector contact units (7.1 ... 7.3) in such a way that the regulating range of the on-load tap changer (1) is mechanically limited.

8. On-load tap changer (1) according to one of the preceding claims, wherein
- the movable selector contacts (11.1, 11.2) of a phase in every stationary operational setting connect at least one fixed selector contact (8.1 ... 8.5) of the same phase of the on-load tap changer (1).

9. On-load tap changer (1) according to one of the preceding claims, wherein
- in each instance two movable selector contacts (11.1, 11.2) are received in a contact carrier (10.1 ... 10.3) to be resiliently mounted.

10. On-load tap changer (1) according to one of the preceding claims and claim 3, wherein
- each vacuum interrupter (19.1 ... 19.6) comprises a movable switch contact (20.1 ... 20.6) which is pivotably and mechanically in operative connection with a coupling element (21.1 ... 21.6) and a control lever (22.1 ... 22.6);
- provided at each pivotable connection between the corresponding coupling element (21.1 ... 21.6) and the control lever (22.1 ... 22.6) on the side facing the support plate (6) is a roller (23.1 ... 23.6), which rolls along a profiled upper side (24) of the guide link (17) under partially maintained contact so that the respective vacuum interrupter (19.1 ... 19.6) is connectible by a longitudinal displacement of the guide link (17) in dependence on the profiling of the upper side (24) thereof.

11. On-load tap changer (1) according to one of the preceding claims and claim 3, wherein
- at each selector contact unit (7.1 ... 7.3) the fixed selector contacts (8.1 ... 8.5) are arranged at a contact strip (25.1 ... 25.3), which contact strips are in turn fastened to the carrier plate (6) by means of respective spacers (27.1 ... 27.3).

12. On-load tap changer (1) according to the preceding claim, wherein
- each contact strip (25.1 ... 25.3) has at its longitudinal side a control link (26.1 ... 26.3) at which several lobes are arranged on both sides.

13. On-load tap changer (1) according to the preceding claim, wherein
- at each selector contact unit (7.1 ... 7.3) the profile of the lobes is so dimensioned that the movable selector contacts (11.1, 11.2) between two adjacent fixed selector contacts (8.1 ... 8.5) lift off from the currently connected fixed selector contact, since the movable selector contacts (11.1, 11.2) again connect the next fixed selector contact after switching over has been completed.

14. On-load tap changer (1) according to any one of the preceding claims 1 to 13, wherein
- two respective vacuum interrupters (19.1 and 19.2, 19.3 and 19.4, 19.5 and 19.6) per phase are directly arranged at the corresponding slide carriage (12.1 ... 12.3) of the respective selector contact unit (7.1 ... 7.3);
- the motor drive (4) drives the central threaded spindle (15) by means of an angle transmission (29);
- each slide carriage (12.1 ... 12.3) has a separate spindle nut (16); and
- the threaded spindle (15) co-operates with each spindle nut (16) and the rotational movement can be converted into a synchronous longitudinal displacement of the slide carriages (12.1 ... 12.3) in such: a manner that not only the movable selector contacts (11.1, 11.2), but also the vacuum interrupters (19.1 ... 19.6) are thereby actuable.

15. On-load tap changer (1) according to claim 1, wherein
- the motor drive (4) drives not only the threaded spindle (15), which in turn is operatively connected with each selector contact unit (7.1 ... 7.3); but also a camshaft (35), by means of which the vacuum interrupters (19.1 ... 19.6) are actuable, in such a manner that both the movable selector contacts (11.1, 11.2) and the vacuum interrupters (19.1 ... 19.6) are thereby actuable.

16. On-load tap changer (1) according to one of the preceding claims for use in voltage regulation of a distributing transformer.

## Revendications

1. Commutateur à gradins en charge (1) pour permettre la commutation sans interruption entre différentes prises d'enroulement d'un transformateur à gradins comprenant :
- une unité de contacts de sélecteur (7.1, 7.2, 7.3), qui comprend plusieurs contacts de sélecteur fixes (8.1, 8.2, 8.3, 8.4, 8.5) qui sont respectivement en liaison électrique avec les différentes prises d'enroulement, et deux contacts de sélecteur mobiles (11.1, 11.2) susceptibles de coulisser longitudinalement par l'intermédiaire desquels les contacts de sélecteur fixes (8.1... 8.6) peuvent être mis en contact,
- pour chaque phase, deux tubes de commutation à vide (19.1, 19.2, 19.3, 19.4, 19.5, 19.6) pour permettre d'effectuer la commutation sans interruption,
- un entraînement motorisé (4) pour transmettre un mouvement d'entraînement au commutateur à gradins en charge (1),
- une broche filetée (15),
**caractérisé en ce que**
- la totalité du commutateur à gradins en charge (1) est installée au moyen d'un module de transmission (3) sur la face inférieure d'un couvercle de transformateur (2),
- le commutateur à gradins en charge (1) comprend trois unités de contacts de sélecteur (7.1.... 7.3),
- chaque unité de contacts de sélecteur (7.1... 7.3) comprend un coulisseau (12.1... 12.3) et un porte-contacts (10.1...10.3),
- le mouvement de rotation produit par l'entraînement motorisé (4) peut être transmis par le module de transmission (3) à la broche filetée (15) qui est en prise avec un écrou de broche prévu sur un coulisseau médian (12.2) de sorte que l'on puisse obtenir ainsi un déplacement longitudinal du coulisseau médian (12.2) le long de tiges de guidage (14.1, 14.2),
- les autres coulisseaux (12.1, 12.3) sont en liaison fonctionnelle avec le coulisseau médian (12.2) par l'intermédiaire d'une coulisse de guidage (17) couplée mécaniquement au coulisseau médian (12.2) et également susceptible de coulisser longitudinalement de sorte que les autres coulisseaux (12.1, 12.3) soient quant à eux couplés mécaniquement au coulisseau médian (12.2) par l'intermédiaire de la coulisse de guidage (17) de façon à pouvoir ainsi actionner simultanément les unités de contacts de sélecteur (7.1...7.3) ainsi que les tubes de commutation à vide (19.1, 19.6).

2. Commutateur à gradins en charge (1) conforme à la revendication précédente,
dans lequel le module de transmission (3) comprend un module d'étanchéité (5) en forme de bride.

3. Commutateur à gradins en charge conforme à l'une des revendications précédentes,
dans lequel il est prévu une plaque support (6) en un matériau diélectrique sur une première face de laquelle sont installées les unités de contacts de sélecteur (7.1,... 7.3) et sur la seconde face de laquelle sont installés les tubes de commutation à vide (19.1... 19.6).

4. Commutateur à gradins en charge (1) conforme à la revendication précédente,
dans lequel chacun des coulisseaux (12.1... 12.3) est reçu par respectivement deux tiges de guidage (14.1, 14.2) parallèles qui sont quant à elles installées au moyen de traverses (13.1...13.3) sur la plaque support (6).

5. Commutateur à gradins en charge (1) conforme à l'une des revendications précédentes, et à la revendication 3,
dans lequel dans chaque unité de contacts de sélecteur (7.1...7.3) les contacts de sélecteur mobiles (11.1, 11.2) sont reçus dans le porte-contacts (10.1...10.3) et coopèrent avec les contacts de sélecteur fixes (8.1...8.5) respectifs installés sur la plaque support (6).

6. Commutateur à gradins en charge (1) conforme à l'une des revendications précédentes et à la revendication 4,
dans lequel chaque unité de contacts de sélecteur (7.1...7.3) est montée coulissante le long des tiges de guidage (14.1, 14.2) au moyen des coulisseaux respectifs (12.1...12.3) de façon à pouvoir ainsi parcourir la plage de réglage du commutateur à gradin en charge (1).

7. Commutateur à gradins en charge conforme à l'une des revendications précédentes et à la revendication 4,
dans lequel les traverses (13.1, 13.3) forment une butée mécanique pour les unités de contacts de sélecteur (7.1...7.3) de façon à limiter mécaniquement la plage de réglage du commutateur à gradins en charge (1).

8. Commutateur à gradins en charge (1) conforme à l'une des revendications précédentes,
dans lequel les contacts de sélecteur mobiles (11.1, 11.2) d'une phase branchent, dans chaque position de fonctionnement stationnaire au moins un contact de sélecteur fixe (8.1...8.5) de la même phase du commutateur à gradins en charge (1).

9. Commutateur à gradins en charge (1) conforme à l'une des revendications précédentes,
dans lequel deux contacts de sélecteur mobiles respectifs (11.1, 11.2) sont reçus dans un porte-contacts (10.1...10.3) en étant montés élastiquement.

10. Commutateur à gradins en charge (1) conforme à l'une des revendications précédentes et à la revendication 3,
dans lequel chacun des tubes de commutation à vide (19.1...19.6) comporte un contact de commutation mobile (20.1...20.6) qui est en liaison fonctionnelle mécanique et articulé sur un organe d'accouplement (21.1...21.6) et un levier de commande (22.1...22.6),
sur chaque articulation de l'organe d'accouplement (21.1...21.6) correspondant et du levier de commande (22.1...22.6) il est prévu, du côté tourné vers la plaque support (6) un galet (23.1...23.6) qui roule avec un contact partiel le long de la face supérieure profilée (24) de la coulisse de guidage (17) de sorte que les tubes de commutation à vide respectifs (19.1...19.6) puissent être branchés par un coulissement longitudinal de la coulisse de guidage (17) en fonction du profilage de sa face supérieure (24).

11. Commutateur à gradins en charge (1) conforme à l'une des revendications précédentes et à la revendication 3,
dans lequel dans chaque unité de contacts de sélecteur (7.1...7.3) les contacts de sélecteur fixes (8.1...8.5) sont installés sur une baguette de contact (25.1...25.3) qui est quant à elle fixée à la plaque support (6) au moyen d'éléments d'écartement (27.1...27.3).

12. Commutateur à gradins en charge (1) conforme à la revendication précédente,
dans lequel chaque baguette de contact (25.1...25.3) comporte sur sa face longitudinale une coulisse de commande (26.1...26.3) sur les deux faces de laquelle sont installées plusieurs cames.

13. Commutateur à gradins en charge (1) conforme à la revendication précédente,
dans lequel dans chaque unité de contacts de sélecteur (7.1...7.3) le contour des cames est dimensionné de sorte que les contacts de sélecteur mobiles (11.1...11.2) situés entre deux contacts de sélecteur fixes (8.1...8.5) voisins se décollent du contact de sélecteur fixe actuellement branché, et après achèvement de la commutation que les contacts de sélecteur mobiles (11.1.... 11.2) branchent à nouveau le contact de sélecteur fixe suivant.

14. Commutateur à gradins en charge (1) conforme à l'une des revendications précédentes 1 à 13,
dans lequel :
- pour chaque phase, respectivement deux tubes de commutation à vide (19.1 et 19.2, 19.3 et 19.4, 19.5 et 19.6) sont directement installés sur le coulisseau (12.1... 12.3) correspondant de l'unité de contacts de sélecteur respective (7.1...7.3),
- l'entraînement motorisé (4) entraîne la broche filetée centrale (15) au moyen d'une transmission d'angle (29),
- chaque coulisseau (12.1... 12.3) comporte un écrou de broche (16) séparé,
- la broche filetée (15) coopère avec chaque écrou de broche (16) et le mouvement de rotation peut être transformé en un coulissement longitudinal synchrone des coulisseaux (12.1... 12.3) de façon à permettre d'actionner ainsi les contacts de sélecteur mobiles (11.1, 11.2) et également les tubes de commutation à vide (19.1...19.6).

15. Commutateur à gradins en charge (1) conforme à la revendication 1,
dans lequel l'entraînement motorisé (4) entraîne la broche filetée (15) qui est en liaison fonctionnelle avec chaque unité de contacts de sélecteur (7.1...7.3) ainsi qu'également un arbre à cames (35) permettant d'actionner les tubes de commutation à vide (19.1...6) de sorte qu'ainsi les contacts de sélecteur mobiles (11.1, 11.2) ainsi que les tubes de commutation à vide (19.1... 19.6) puissent être actionnés.

16. Commutateur à gradins en charge (1) conforme à l'une quelconque des revendications précédentes, destiné à être utilisé pour réguler la tension d'un transformateur de distribution.
